(19) Europäisches Patentamt
European Patent Office
Office européen des brevets

(11)    **EP 2 742 820 B1**

(12)                                    **EUROPEAN PATENT SPECIFICATION**

(45) Date of publication and mention
of the grant of the patent:
**18.03.2015   Bulletin 2015/12**

(51) Int Cl.:
*A43B 7/12* *(2006.01)*       *A43B 23/06* *(2006.01)*
*A43B 23/07* *(2006.01)*

(21) Application number: **12197311.9**

(22) Date of filing: **14.12.2012**

(54) **Monofilament footwear lining**

Monofilamentschuhfutter

Garniture de chaussure monofilament

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.06.2014   Bulletin 2014/25**

(73) Proprietors:
• **W.L. Gore & Associates GmbH
85640 Putzbrunn (DE)**
• **W.L. Gore & Associati S.r.l.
37135 Verona (IT)**

(72) Inventors:
• **Pfister, Martin
85635 Höhenkirchen (DE)**

• **Heidenfelder, Jens
85604 Zorneding (DE)**
• **Giupponi, Andrea
37135 Verona (IT)**

(74) Representative: **Klunker . Schmitt-Nilson . Hirsch
Patentanwälte
Destouchesstraße 68
80796 München (DE)**

(56) References cited:
**EP-A1- 2 238 850    EP-A2- 0 298 360
US-A- 5 505 011**

**Description**

The present invention relates to an upper assembly for a waterproof, water vapor permeable footwear article, and to a waterproof, water permeable footwear article comprising such upper assembly.

Known approaches for providing waterproof and breathable footwear included the use of upper materials (i.e. leather) treated to make the upper water resistant. The upper material loses its breathability when treated to impart water resistance, thus making the footwear uncomfortable for the wearer. An alternative approach to the goal of achieving comfortable waterproof footwear involved employing a vapor permeable and waterproof insert or bootie into the shoe. Further approaches have included securing a waterproof, breathable liner material to the inside of the footwear upper and sealing the liner material to a waterproof gasket or insole. There have been many different attempts at providing a durable, waterproof seal or connection at the region where the liner material is joined with the waterproof gasket or insole. These attempts have resulted in varying degrees of success.

In the footwear art, materials which are both waterproof and water vapor permeable are commonly referred to as "functional" materials or "barrier" materials. Exemplary of such a functional material is a microporous, expanded polytetrafluoroethylene membrane material available from W. L. Gore and Associates GmbH, Putzbrunn, Germany, under the trade name GORE-TEX(R). Other functional materials have also been developed and are well known in the art.

One problem which often results when forming such waterproof, breathable footwear is that the insertion of the waterproof, vapor permeable liner or bootie will often result in a poor fitting shoe (i.e., a smaller fit due to the liner being inserted into the already sized shoe upper) and/or poor attachment between the liner or bootie and the shoe upper material. This results in, among other things, a less than desirable appearance of the inside of the footwear and even discomfort in use, since the liner appears wrinkled or pulls away from the upper.

In practically all footwear applications used up to date, the functional layer has been covered by at least one additional inner liner facing towards the interior of the footwear during use. The additional inner liner provides for improved visual appearance and also for better comfort to the wearer of the footwear in use. Such inner liners are made of materials, e.g. textile materials, leather, or polymeric materials, being soft and able to take up moisture in order to enhance comfort. Such inner liners are also very often thick to improve comfort and take up of moisture. Typical inner liners are made of all kinds of fabric like woven fabric, knit fabric, or non-woven fabric made of multifilament yarns having wicking characteristics in order to absorb moisture produced by the foot of the wearer. Inner liners are also made of leather, polymeric "artificial leather", or non-woven fabric. These inner liner fabrics are also often combined with foam or nonwoven layer to increase thickness and provide cushioning and stand. An example for a fabric used as an inner liner in footwear articles is a non-woven material sold under the name "Cambrelle". Typically inner liners are thick and heavy to provide abrasion resistance and durability.

A number of footwear applications use a three layer laminate having a functional layer embedded between two textile layers. The textile layer facing inwards is a liner as described above. The additional textile layer facing outwards is a mesh.

Footwear liners in the form of a three layer and/or a two layer laminate are mostly hanging loose within the upper assembly and are fixed only along the upper edge of the upper assembly, or are fixed discontinuously to the upper material forming an outer shell of the upper assembly, e.g. by using adhesive dots.

US 2011/0179677 A1 discloses an article of footwear having a hybrid upper construction including a superior compartment and an inferior compartment. The superior compartment includes a laminate composed of an innermost layer (closest to the food) and at least one polymeric film layer. The polymeric film layer is made of a vapor permeable, waterproof polymeric film attached to the outer side of the innermost layer. In one embodiment the polymeric film layer is sandwiched between the innermost layer and an outer layer.

The innermost layer is made of a lightweight material that provides comfort and breathability to the user when the user's foot comes in contact with the innermost layer during normal use and wear of the article of footwear. This material may include a nonwoven fabric, a knit fabric or woven fabric made of multifilament yarn, such as rayon, nylon, and/or polyester yarn. In one example, the innermost layer is made of a 170 g/m$^2$ hydrophilic nylon, texturized polyester knit.

US 2004/0216332 A1 discloses a waterproof, vapor permeable footwear construction having an upper assembly with an upper and a layer of textile material forming an upper layer located underneath the upper next to the foot of the wearer of the footwear. A wide variety of fabrics made up with multifilament yarns can be utilized for the upper layer including woven, nonwoven and knit fabrics, e.g. a warp knit fabric. Examples of warp knit fabrics include an abrasive resistant polyester and nylon combination fabric sold under the trademark ECLIPSE 100H™, a lightweight nylon fabric sold under the trademark ECLIPSE 400H™, and a three bar knit fabric.

EP 02 98 360 A2 discloses an upper assembly with the features of the preamble of claim 1.

For footwear intended for use in warmer climate conditions, vapor permeability of the materials used and reduced thickness of the layers to increase heat loss and reduce weight is of utmost importance. Yet, waterproofness and high durability are additional requirements that typically restrict achievable vapor permeability of such footwear. The requirement of durability typically also implies constraints with respect to achievable weight reduction. This applies the more in case of footwear to be used during strenuous activities in harsh environments, as is the case for footwear for military, civil defence, fire fighting or similarly demanding applications, for example.

During use in wet conditions it may happen that moisture, usually in the form of water or other liquids, enters into the inside of the footwear over the upper edge area of the upper assembly, e.g. when crossing a river or when walking on highly rainy or muddy ground. Footwear should be able to re-dry fast after having become wet on the inside. A particular problem with conventional footwear is that, in a situation where the interior of the footwear has become wet, the inner liner becomes soaked with moisture, thus making the footwear heavy, uncomfortable and difficult to re-dry.

Thus, there remains a need for highly mechanically resistant footwear that maintains a high degree of durability and breathability in use, even in case of extended use in harsh environments and under relatively warm climate conditions. There is also a need for light and highly breathable footwear, even in case where such footwear is to be used in extremely wet and harsh environment.

According to the invention as defined in claim 1, an upper assembly for a waterproof, water vapor permeable footwear article comprises a laminate including a waterproof, water vapor permeable functional layer, and an inner lining layer directly attached to the functional layer on an inner side of the functional layer. The inner lining layer is a knitted or woven fabric made with monofilaments.

Knits, as used herein, also include nettings, grid monofilaments and braids.

Inner side, as used herein, refers to the side of the functional layer facing towards the foot of the user. The functional layer is sometimes also referred to as a barrier layer, in view of its function to prevent entry of moisture, in the form of liquid water or of other liquids, into the interior of the footwear.

Monofilaments refer to filaments or fibers made of one single filament only. In contrast to ply/twisted/braided yarns, or threads, as conventionally used to produce fabrics, a monofilament thus does not have an inner structure in form of twisted of braided filaments, but rather is made of a single string of material. In one embodiment in which a monofilament is made of polymer, the monofilament has the configuration of a single homogeneous string of the polymer material. Such single string may be formed e.g. by extrusion. Due to its homogeneous structure and absence of any inner structure, moisture, e.g. water vapor- and/or liquid water, and/or any other liquids, may be taken up by the monofilament only on a molecular scale, i.e by incorporation of water molecules or liquid molecules into the molecular structure of the monofilament material. Thus, the ability of the monofilament to take up moisture will depend on molecular characteristics of the material the monofilament is made from. Different from multifilaments, there are no inner structures, like voids or capillars, which may increase water absorption capability of the monofilament.

Such upper assembly, as well as a footwear article using such upper assembly, has turned out to be lightweight and highly water vapor permeable. Still, a footwear article using such upper assembly may be fully waterproof and durable. Particularly, such footwear article may have the capability of re-drying quickly after it has become wet on the inside.

In particular embodiments, the inner lining layer may be made up of monofilaments having a water absorption rate of less than 40% according to the "Bundesmann test" as described in DIN EN 29685 (1991). In further particular embodiments the monofilaments may have a water absorption rate of even less than 30%, or even of less than 25 %, according to DIN EN 29685 (1991). In some embodiments the monofilaments may have a water absorption rate of 20 % to 35% according to DIN EN 29685.

Water absorption rate as used herein, refers to a water absorption rate of the monofilaments as measured using a laminate made up of the functional layer (e.g. an ePTFE functional layer as described below) and the inner lining layer made up of monofilaments. In such laminate the functional layer serves as a carrier for the inner lining layer. Water absorption is measured on the side of the inner lining layer in an experimental setup as described in detail in DIN EN 29685 (1991).

The inner lining layer used for the upper assembly, as suggested herein, provides for a particularly low water absorption by the inner lining layer. Thus, moisture produced by the wearer's foot is not absorbed or otherwise taken up by the inner lining liner, but is transported to the functional layer. The inner lining layer has a knit and/or woven configuration formed of monofilaments interlaced with each other to form loops, meshes and/or interstices between weft and warp yarns. Thus, the inner lining layer creates a large number of interstices in between the monofilaments. The monofilaments themselves do not significantly take up moisture. Also, the interstices formed in the inner lining layer may be relatively large, and thus do not provide for significant capillary function. Rather, moisture is transported through the interstices formed by the inner lining layer towards the functional layer.

The inner lining layer may be lightweight. In some embodiments the inner lining layer may have a textile weight of not more than 130 g/m$^2$. The textile weight of the inner lining layer may even be not more than 100 g/m$^2$, or even be not more than 90 g/m$^2$. In some embodiments, the textile weight of the inner lining layer may be in the range of 40 g/m$^2$ to 130 g/m$^2$.

Also, the laminate made up of the inner lining layer and the functional layer, optionally also including an outer textile layer, may be lightweight, and thus highly breathable. In some embodiments, the laminate may have a weight of less than 200 g/m$^2$, particularly less than 170 g/m$^2$, particularly of less than 150 g/m$^2$, particularly of 170 g/m$^2$ to 90 g/m$^2$.

Such embodiments provide for a most lightweight, but still durable footwear laminate including a functional layer. Breathability of the laminate is increased while weight can be reduced up to 20 % compared to conventional functional layer laminates used in footwear industry.

In still further embodiments, the upper assembly may comprise an outer shell. The laminate described herein may be attached to an inner side of such outer shell. In an example, the laminate may be directly attached to the outer shell using a discontinuous adhesive. The outer shell may be made from any material as used for conventional breathable uppers in the footwear industry, e.g. leather. Such material may be selected to achieve a desired visual appearance, abrasion resistance or the like.

Besides being lightweight and highly vapor permeable, the particular configuration of the inner lining layer allows for efficient re-drying after the inside of the upper assembly has become wet. In particular embodiments, laminates including a functional layer and an inner lining layer as described above may have a dry-out time of less than one hour, particularly of less than 30 minutes, particularly of 20 minutes, particularly of 15 minutes to 45 minutes. Dry-out time is measured according to the test described below.

In particular embodiments the inner lining layer may have a high wet abrasion resistance of more than 100000 cycles Martindale, measured as described in EN-ISO 20344:2004. Even wet abrasion resistances of more than 200000 cycles Martindale (EN-ISO 20344:2004), more than 300000 cycles or even more than 400000 cycles Martindale (EN-ISO 20344:2004) may be achieved. In some particular embodiments the wet abrasion resistance may be 300000 to 450000 cycles Martindale (EN-ISO 20344:2004). Compared to conventional inner linings used for footwear, e.g. as prescribed by EN 20345 requiring 51.200 cycles Martindale for heel counter linings in protective footwear, the abrasion resistance is improved by 600 %, or even more.

In particular embodiments, the inner lining layer may be a warp knit, particularly a three bar warp knit. A three bar warp knit, as a result of the particular way it is manufactured using three sets of guide bars arranged in three different planes in thickness direction of the fabric, is relatively thick and thus abrasion resistant. However, such fabric may have a knit structure including relatively large interstices or meshes. For such reason, a three bar warp knit fabric made up with monofilaments has turned out to be both abrasion resistant and highly vapor permeable. Moreover, different materials may be used for the monofilaments depending on particular characteristics. Monofilaments may be used with each the guide bars of the warp knit. In some applications it may be considerable - and is to be considered within the scope of the present invention - to use monofilaments only for one or two of the three guide bars. Embodiments including both monofilaments and multifilaments typically will have inferior re-dry characteristics than embodiments where the inner lining layer is made up using monofilaments exclusively.

Further, the inner lining layer may be a singular knitted fabric. Singular knitted fabrics have a regular and simple knitting pattern, e.g. a simple "right/left" pattern of meshes. Such knits are relatively elastic and stretchable.

In particular embodiments, the inner lining layer may be made of monofilaments of any material of the group consisting of polyamide, like polyamide 6 or polyamide 6.6, and polyester, and combinations thereof. Such polymer materials have highly non- absorbent molecular structure with respect to water vapor, water, or other liquids, thus they allow relatively low water absorption rates if provided in the form of monofilaments.

The thickness of the monofilament inner lining layer may be from dtex 10/f1 up to dtex 300/f1.A currently preferred thickness is dtex 20/f1.

In still further embodiments of the upper assembly, the laminate further may comprise an outer textile layer attached to an outer side of the functional layer. The outer textile layer may have the configuration of a mesh supporting the functional layer and/or improving adherence of the laminate to an outer shell of the upper assembly, if provided. "Outer side of the functional layer" refers to that side of the functional layer facing away from the foot in use.

In particular embodiments of the upper assembly, the laminate may extend around the upper side of the foot. E.g. the laminate may cover the inner side of an upper or outer shell of the footwear wrapping around the side and upper parts of the foot. The laminate may also, but not necessarily has to, cover the underside of the foot, e.g. in the form of a lining covering an inner side of an insole which extends below the foot. Such lining may have a sock-like configuration typically referred to a "bootie", or may be a composite bag like structure of an inner upper lining covering the inner side of the upper and an inner insole lining connected, alone or together with the insole, to the bottom edges of the inner upper lining.

Using monofilaments for the inner lining layer provides for the possibility of seam sealing the laminates without using a primer at all. This is a unique benefit, as two pieces of inner lining material may be bonded and sealed to each other, e.g. using stitches and sealing tape, using ultrasonic bond/weld, heat bond/weld, and the like techniques without use of an additional primer. In the same way, two pieces of laminates each having an inner lining layer made up with, or from, monofilaments can be seam sealed with respect to each other, e.g. using stitches and sealing tape, using ultrasonic bond/weld, heat bond/weld, and the like techniques, without application of any additional preparatory techniques, like primers. This characteristic of an inner lining layer made up with, or from, monofilaments simplifies production of a footwear article considerably, thus making production particularly easy and convenient.

In some embodiments, the inner layer of the laminate may be the innermost layer of the upper assembly, i.e. the layer closest to the foot. In such configuration, the inner layer will be in direct contact with the foot of the person wearing the footwear and thus determine comfort.

In still further embodiments, the upper assembly further may comprise an outer shell, the laminate being attached to an inner side of the outer shell. Such outer shell may be made of any material as used for conventional footwear uppers, and may be selected according to a desired visual appearance and/or abrasion resistance of the footwear. "Inner side" refers to that side of the outer shell facing towards the foot. In one embodiment, the upper laminate may be directly attached (bonded) to the inner side of the outer shell in a breathable manner over the whole surface of the inner side of the outer shell.

The upper assembly described above may be used in construction of a footwear article. Such footwear article may include an upper assembly as describe above and a sole in communication with the upper assembly. The sole may be cemented to the upper assembly, or injected to the upper assembly. Other configuration for attaching a prefabricated sole to the upper assembly, like high frequency welding or stitching, are conceivable as well.

In particular embodiments, a footwear article may be provided having a whole boot moisture vapor transmission rate of 7 g/hr or greater, particularly of 8.75 g/hr or greater, particularly of 8 to 9.5 g/hr.

Particular embodiments of a footwear article using an upper assembly according to the embodiments set out above, may be waterproof according to the Dynamic Water Penetration Test set out below. It has been shown that such footwear article may successfully fulfil more than 100000 flex cycles, particularly more than 300000 flex cycles, in some embodiments even more than 500.000 flex cycles of the Dynamic Water Penetration Test.- E.g. in some particular embodiments between 350000 - 1000000 flex cycles may be fulfilled successfully, i.e. without significant entry of water into the interior of the shoe (see ISO 20344:2011).

## DEFINITIONS AND TEST METHODS

### Functional layer:

The term "functional material" refers to materials which are both waterproof and water vapor permeable. Such materials are typically provided in laminar configuration, thus forming layers or sheets. Exemplary of such a functional material is a microporous, expanded polytetrafluoroethylene membrane material available from W. L. Gore and Associates GmbH, Putzbrunn, Germany, under the trade name GORE-TEX(R). Other functional materials have also been developed and are well known in the art.

Functional materials are often provided in form of laminates where at least one layer made of functional material is laminated together with at least one additional layer. Laminates in footwear industry are comprised of at least two layers, e. g in the form of a two layer laminate including a functional layer supported on a textile layer. Alternatively, three layer laminates may be used having a functional layer sandwiched in between two water vapor permeable, but not necessarily waterproof, fabric layers. Such laminates may also have a discontinuous adhesive applied to the functional layer on one or both sides in order to adhere the functional layer to an outer shell or to an inner lining material, like leather, in a separate step.

"Functional" materials or "functional" layers often are referred to as ""barrier" materials or layers.

### Knit Fabric:

As used herein, the term "knit fabric" refers to any fabric or textile having a configuration with at least one yarn or thread turned into consecutive rows of loops, called loopstitches. As each row progresses, a new loop is pulled through an existing loop. The active loopstitches are held on a needle until another loop can be passed through them.

In the process of knitting a fabric is formed by the intermeshing of loops of yarn or yarns. Each yarn follows a meandering path, called course, thus forming loops symmetrically to the meandering path of the yarn. When one loop is drawn through another, loopstitch is formed. Loopstitches may be formed in horizontal (weft knitting) or vertical direction (warp knitting). A sequence of loopstitches in which each stitch is suspended front the next is called a wale.

Weft knitting is a method of forming a fabric in which the loops are made in horizontal way from a single yarn, and intermeshing of loops takes place in a crosswise direction, i.e. the wales are perpendicular to the course of the yarn. Weft knitting may be knit using only one yarn, or using a multiplicity of yarns.

Warp knitting is a method of fabric forming in which the loops are made in a vertical way along the length of the fabric from each warp yarn, and intermeshing of loops takes place in a lengthwise direction. In warp knitting, the wales and courses run parallel. One yarn is required for each wale, thus numerous ends of yarns are being fed simultaneously to individual needles placed in a lateral direction.

Knits, as used herein also includes nettings, grid monofils and braids.

**Woven Fabric:**

Woven fabric refers to a fabric formed by weaving. Weaving is a process of fabric forming by the interlacement of warp and weft yarns. Both warp and weft yarns run essentially straight and parallel to each other, either lengthwise (warp) or crosswise (weft). Woven fabric only stretches diagonally on the bias directions (between the warp and weft directions), unless the threads are elastic.

**Non-Woven Fabric:**

Non-woven fabric refers to a fabric-like material, such as felt, which is neither woven nor knitted. Non-woven fabric is made from fibres, bonded together by chemical, mechanical, heat or solvent treatment. Non-woven fabric, unless densified or reinforced by a backing, typically lacks mechanical strength.

**RET Test Method for the Functional Layer Laminate:**

Water vapor permeability may be expressed by water vapor transmission restistance (RET) The water vapor transmission resistance (RET) is a specific material property of sheet-like structures or composites which determines the latent evaporation heat flux through a given area of the sheet-like structure or composite, under a constant partial pressure gradient. RET is measured by the Hohenstein skin model, of the Bekleidungsphysiologisches Institut (Apparel Physiology Institute] e.V. Hohenstein. The Hohenstein skin model is described in ISO 11092:1993.

**Dynamic Footwear Water Penetration Test**

Waterproofness, as used herein, may be expressed by a dynamic footwear water penetration test carried out according to ISO 20344:2011. This test method is intended to provide a means of evaluating the degree of water resistance of footwear. The method is applicable to all types of footwear, particularly shoes and boots.
The footwear is secured in a flexing machine with water at a defined level above the featherline (i.e. the edge between the sole and upper). The footwear is flexed at a constant rate and inspected at predefined intervals for water penetration.
The flexing machine comprises, at each testing station:

(i) a system for flexing the footwear through an angle of $(22\pm5)°$ at a rate of $(60\pm6)$ flexes per min; and
(ii) a flexible foot-form which is fitted inside the footwear to control the way the footwear flexes (this footform may be provided with water sensors)

The total wetted area inside the footwear shall be not greater than 3 cm$^2$ when tested in accordance with either of:

- ISO 20344:2011, 5.15.1, after 100 trough lengths (MP), or
- ISO 20344:2011, 5.15.2, after 80 min (corresponding to 80 flexing cycles on the system for flexing the footwear described under (i) above)

**Test for Determing Water Absorption Rate of Inner Lining:**

Determining the water absorption properties of textile structures is using a rain test according to the Bundesmann test described in DIN EN 29865 (1991).
The rain unit creates rain defined by water volume, drop size and distance of rain unit to test samples. The test runs for 10 minutes.
The water absorption (Test I) of the fabric and/or laminate are measured according to the following method:

1. Determination of the weight of the sample (fabric/laminate);
2. Performing the Bundesmann rain test for 10 minutes;
3. Spinning of the sample for 15s;
4. Determination of the weight of the sample;
5. Calculation of the weight gain in % related to the sample before the Bundesmann rain test.

**Determination of Dry-out time according to Bundesmann Rain Test:**

The Bundesmann rain test (DIN EN 29685) may be used to determine dry-out time as follows:

1. Carry out the Bundesmann rain test according to a) above, and calculate the weight gain of the sample after the Bundesmann rain test related to the sample before the Bundesmann rain test (in %);

2. Put the sample in a conditioned room (23°C, 50% air moisture);

3. Measure the weight of the sample every 30 minutes (related to the weight of the sample before Bundesmann rain test, in %);

4. Continue measurement of the weight up to a maximum of 3 hours, or until the sample has reached its weight before the Bundesmann rain test.

**Wet Abrasion Resistance Test**

The wet abrasion Martindale test is a test to check the abrasion resistance of footwear linings, i.e. the innermost textile side adjacent to the foot, according to EN ISO 20344:2004, 6.12. Such test involves abrading circular test pieces on a reference abradant, under a specified pressure, with a cyclic planar motion on the form of a Lissajous figure. The resistance to abrasion is assessed by subjecting the test piece to a defined number of cycles at which point it shall not exhibit any holes.

The test is continued until either a hole forms in the test piece or the intende number of cycles have been performed (see below). If the fabric sample has a hole, it is only necessary to take account of holes in the base fabric. A hole should only be considered as a hole when it extends through the full thickness of the layer constituting the wear surface. This is assessed by the naked eye.

EN ISO 20345 specifies abrasion requirements for linings of different components of footwear, under dry and wet conditions , as follows:

When tested in accordance with ISO 20344:2011, 6.12, the lining shall not develop any holes before the following number of flex cycles has been performed:

For vamp and quarter lining:

- 25600 flex cycles when dry;
- 12800 flex cycles when wet.

For seat region lining:

- 51200 flex cycles when dry;
- 25600 flex cycles when wet.

For heel counter lining:

- 51200 flex cycles when wet.

**Whole Boot Moisture Vapor Transmission Rate Test**

The Whole Boot Moisture Vapor Transmission Rate (MVTR) for each sample was determined in accordance with Department of Defense Army Combat Boot Temperate Weather Specifications. The specifications are as follows:

Whole boot breathability:

The boot breathability test shall be designed to indicate the Moisture Vapor Transmission Rate (MVTR) through the boot by means of a difference in concentration of moisture vapor between the interior and the exterior environment.

Apparatus:

a. The external test environment control system shall be capable of maintaining 23 (+-1) C and 50%+-2% relative humidity throughout the test duration.

b. The weight scale shall be capable of determining weight of boots filled with water to an accuracy of (+-0.01) gram.

c. The water holding bag shall be flexible so that it can be inserted into the boot and conform to the interior contours; it must be thin enough so that folds do not create air gaps; it must have much higher MVTR than the footwear product to be tested; and it must be waterproof so that only moisture vapor contacts the interior of the footwear product rather than liquid water.

d. The internal heater for the boot shall be capable of controlling the temperature of the liquid water uniformly in the boot to 35 (+-1) C.

e. The boot plug shall be impervious to both liquid water and water vapor.

Procedure:

a. Place boot in test environment.

b. Insert holding bag into boot opening and fill with water to a height of 12.5 cm (5 in) measured from inside sole.

c. Insert water heater and seal opening with boot plug.

d. Heat water in boot to 35 C.

e. Weigh boot sample and record as Wi.

f. Hold temperature in boot after weighing for a minimum of 6 hours.

g. After 6 hours, reweigh boot sample. Record weight as Wf and test duration as Td.

h. Compute whole boot MVTR in grams/hour from the equation below:

$$MVTR = (Wi-Wf)/Td$$

Method of Inspection:

Each boot shall be tested in accordance with the method described above. The average whole boot MVTR from the 5 boots tested shall be greater than 3.5 grams/hour to satisfy the breathability standard.

## DETAILED DESCRIPTION

Particular embodiments of the invention are described in the following detailed description by way of example and taking reference to the drawings. The drawings show:

Fig. 1       is a perspective and cross-sectional view of a waterproof, vapor permeable footwear article.
Fig. 2       is a schematic cross-sectional view of the footwear article shown in Fig. 1.
Fig. 3a,b    are a schematic views showing an inner liner in form a three bar warp knit made of monofilaments from its two opposite "right" and "left" sides.
Fig. 4       is a schematic view showing an inner liner in form a woven made of monofilaments.

The figures illustrate certain embodiments. It will be apparent to those skilled in the art that these embodiments do not represent the full scope of the invention which is broadly applicable in the form of variations and equivalents as may be embraced by the claims appended hereto. Furthermore, features described or illustrated as part of one embodiment may be used with another embodiment to yield still a further embodiment. It is intended that the scope of the claims extend to all such variations and embodiments.

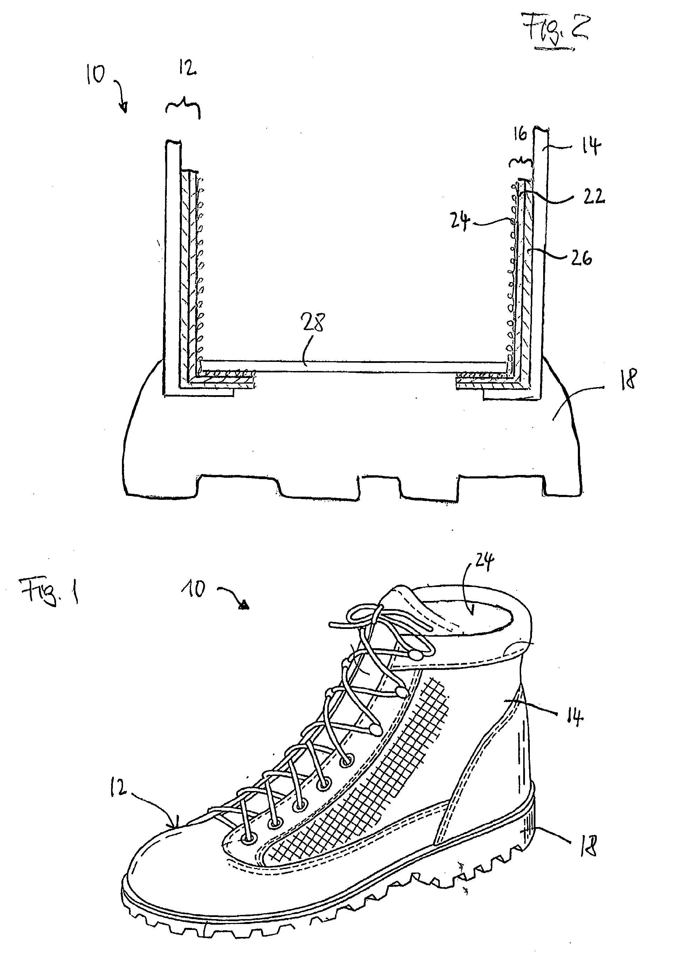

Fig. 1 shows a waterproof breathable footwear article 10. The footwear article 10 includes an upper assembly 12 and a sole 18. In Fig. 1 sole 18 is made of polymer material, e.g. polyurethane. Although shown in form of a monolithical sole 18, sole 18 may have a composite structure made of various sole layers or elements, like midsole, outsole, or further layers to improve comfort or stablilization characteristics. The sole 18 may even include an outsole made of leather. Sole 18 may be a prefabricated sole assembly which is joined to the upper assembly 12, e.g. by cementing or direct injection molding. Alternatively, sole 18 may be formed by direct injection molding of polymer material, e.g polymer material forming an outsole, to the upper assembly 12.

As shown in Fig. 2, the upper assembly 12 includes an outer shell 14, an upper laminate 16 and an insole 28. The upper laminate 16 is composed of an inner lining layer 24 (closest to foot), a functional layer 22, and an outer textile layer 26 (furthest from foot). The outer textile layer 26 is disposed directly to the inner side of outer shell 14. In some embodiments, the outer textile layer 26 may be made of typical shoe upper materials, like leather. In such cases, no separate outer shell 14 need be provided. The functional layer 22 is often referred to as "barrier layer" in view of one of its functions, namely to prevent entry of moisture (water or other liquids).

The outer shell 14 may be made of any vapor permeable material us used for footwear uppers, e.g. leather, and/or a robust vapor permeable fabrics material. In examples, outer shell 14 may include a woven fabric, a knit fabric, a non-woven fabric, leather, synthetic leather, perforated rubber, polymer mesh, a discontinuous pattern of non-breathable material, the like, or combinations thereof. Outer shell 14 may also include a protective cover constructed of a variety of materials including, but not limited to, leather, woven fabric, knit fabric, synthetic leather, perforated rubber, polymer mesh, a discontinuous pattern of non-breathable material, nonwoven fabric, the like, or combinations thereof. Regardless of the type of material used for the protective cover, it should be of sufficient durability to protect the upper laminate 16 during normal use of the footwear article and breathable enough to maintain comfort within the shoe. The type of material utilized for the outer shell 14 will be selected such as to provide sufficient abrasion resistance to the upper assembly 12, to provide adequate protection for the wearer of the article of footwear. Protective cover is optional and may be omitted where outer shell 14 itself provides for sufficient protection of upper laminate 16 and the wearer's foot.

The functional layer 22 may comprise a film. Desirably, the film may include polymeric materials such as fluoropolymers, polyolefins, polyurethanes, and polyesters. Suitable polymers may comprise resins that can be processed to form porous or microporous membrane structures. For example, polytetrafluoroethylene (PTFE) resins that can be processed to form stretched porous structures are suitable for use herein. For example, PTFE resins can be stretched to form microporous membrane structures characterized by nodes interconnected by fibrils when expanded according to the process taught in patents such as in US 3,953,566, U.S. 5,814,405, or US 7,306,729. In some embodiments, expanded PTFE fluoropolymer films are made from PTFE resins according to U.S. Pat. No. 6,541,589, having comonomer units of polyfluorobutylethylene (PFBE). For example, microporous expanded PTFE (ePTFE) fluoropolymers can comprise PTFE having from about 0.05% by weight to about 0.5% by weight of comonomer units of PFBE based upon the total polymer weight.

In one embodiment, the film includes ePTFE having a microstructure characterized by nodes interconnected by fibrils, wherein the pores of the porous film are sufficiently tight so as to provide liquidproofness and sufficiently open to provide properties such as water vapor transmission, and/or penetration by coatings of colorants and oleophobic compositions. For example, in some embodiments, it is desirable for the porous membranes to have an average median flow pore size of less than or equal to about 400 nm to provide water resistance, and a median flow pore size greater than about 50 nm for colorization. This may be accomplished by compounding a PTFE resin which is suited to produce a node and fibril microstructure upon stretching. The resin can be blended with an aliphatic hydrocarbon lubricant extrusion aid such as a mineral spirit. The compounded resin may be formed into a cylindrical pellet and paste extruded by known procedures into a desired extrudable shape, preferably a tape or membrane. The article can be calendered to the desired thickness between rolls and then thermally dried to remove the lubricant. The dried article is expanded by stretching in the machine and/or transverse directions, for example, according to the teachings of U.S. Pat. Nos. 3,953,566, 5,814,405, or 7,406,729, to produce an expanded PTFE structure characterized by a series of nodes which are interconnected by fibrils. The ePTFE article is then amorphously locked by heating the article above the crystalline melt point of PTFE, for example between about 343°C-375°C.

The ePTFE may be covered by a film of hydrophilic material, particularly polyurethane, as described in US 4 194 041.

The upper laminate 16 has the configuration of a three-layer laminate with the functional layer 22 forming the middle layer of such three layer laminate.

An outer textile layer 26 of the upper laminate 16 faces towards the inner side of the outer shell 14. The outer textile layer is made of a knit fabric.

The upper laminate 16 further comprises an inner lining layer 26 provided on the inner side of the functional layer 22. Thus, the inner lining layer 26 is the innermost layer of the upper assembly, i.e. the layer closest to the foot of the wearer in use. In such position, the inner lining layer 26 is directly exposed to any sweat produced by the wearer's foot.

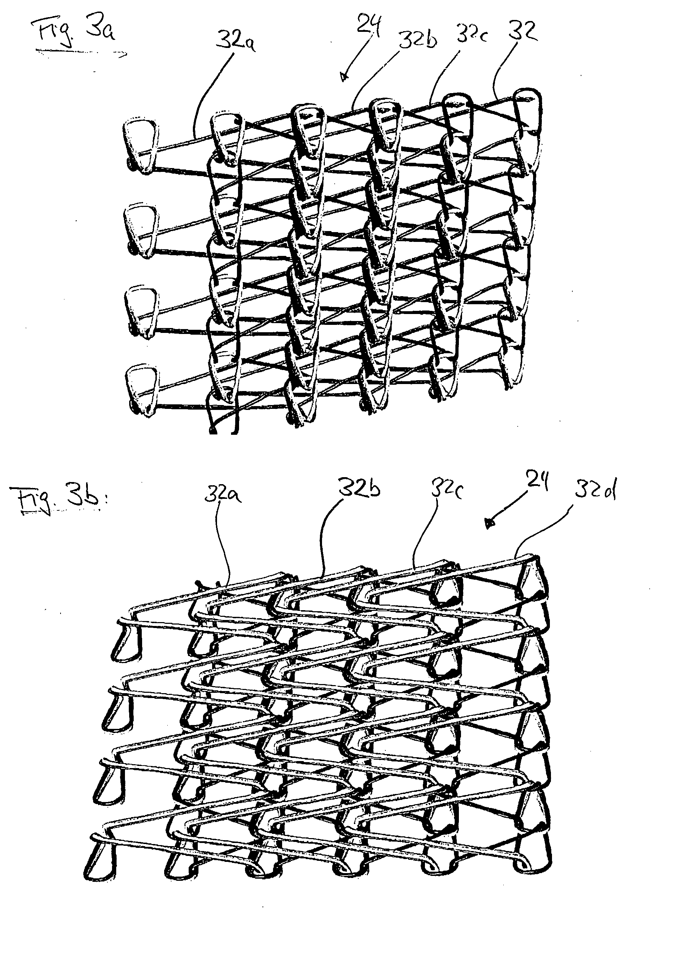

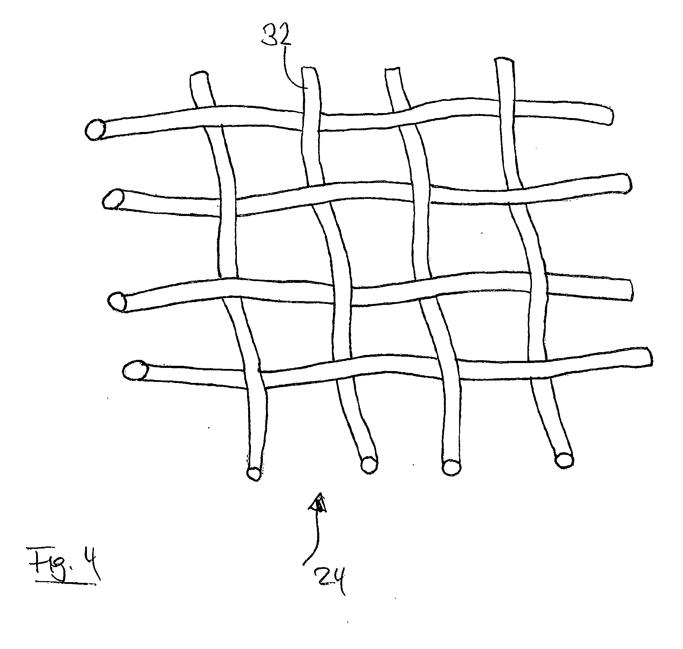

The inner lining layer 24 is desirably made from a lightweight material that provides comfort and breathability to the user when the user's foot comes into contact with the inner lining layer 24 during normal use and wear of the article of footwear 10. Such materials may include, but are not limited to, a knit fabric (see Fig. 3a/3b), or woven fabric (see Fig. 4).

The inner lining layer 24 is made from at least one monofilament 32, i.e. made from at least one filament or fiber made of one single filament only. Conventionally, ply/twisted/braided yarns, or threads, are used to produce fabrics. In contrast to such ply/twisted/braided yarn, or thread, a monofilament is made as a homogeneous piece of material, and therefore does not have an inner structure in form of twisted of braided filaments. Rather, a monofilament has the configuration of a single string of material. E.g. in case of a monofilament made of polymer, such monofilament may be made by extruding a polymer material in the form of a thin filament or string. Such monofilament will have the configuration of a single homogeneous string of the polymer material.

Due to the homogeneous structure and due to the absence of any inner structure of a monofilament, absorption of water or other liquids by a monofilament will be possible only by incorporation of water or liquid molecules into the molecular structure of the material from which the monofilament is formed. Water absorption rate or liquid absorption rate thus will be determined by the molecular configuration of the material from which the monofilament is formed, but will not be enhanced by inner structures, like voids or capillars, of the filament, which otherwise may increase water absorption capability or liquid absorption capability of the filament.

Using at least one monofilament 32 made from suitable material, an inner lining layer 24 can be provided which has a relatively low water absorption capability. In the embodiment shown, the at least one monofilament 32 is made of polyamide which is a polymer material known to have a relatively low affinity to take up water molecules.

The characteristic of the inner lining layer 24 not to have an affinity to absorb water or liquids may be even enhanced by providing the inner lining layer 24 in a configuration having relatively large interstices formed in between the at least one monofilament 32. Such configuration may be provided by a knit fabric, as shown in Fig. 3a/3b, or by a woven fabric as shown in Fig. 4. In particular an inner lining layer 24 in the configuration of a singular knitted three bar warp knit, as shown in Fig. 3a/3b, has been proven to combine the characteristics of relatively low water or liquid absorption capability with high durability.

Further, an inner lining with a configuration as described above and shown in Figs. 3a/3b and 4 is lightweight, and thus also is highly vapor permeable. Using such fabric as the inner lining layer in a footwear article does not impair comfort, as sweat is transported to the functional layer efficiently, and transported towards outside via the functional layer.

Fig. 3a and 3b show in an enlarged schematic view a singular knitted, three bar warp knit fabric. Such fabric has turned to be a highly suitable material for forming the inner lining layer 24. Fig. 3a shows the singular knitted, three bar warp knit fabric in a view towards its "right" material side, while Fig. 3b shows the same singular knitted, three bar warp knit fabric in a view towards its "left" material side. The warp knit structure made of a multiplicity of monofilament yarns (in Fig. 3a/3b yarns 32a, 32b, 32c, 32d are designated exemplary) is clearly visible. Each yarn is a monofilament yarn made of polyamide 6.

A warp-knitted shoe liner fabric of a three-bar construction has a three-dimensional character in the fabric's thickness dimension with a lapping pattern of elongated coursewise underlaps at the fabric's technical back which, in use, is to be oriented to face inwardly of the interior foot-receiving area of the shoe. A three bar warp knit is manufactured using three guide bars on the knitting machine. The three guide bars carry out lapping movements in a specific feed of the monofilament yarn. This leads to three layers of yarn, in particular monofilament yarn like PA 6 22f1, overlapping each other and being connected to each other. In one example the following lapping pattern may result (with L1 = lapping pattern of guide bar 1; L2 = lapping pattern of guide bar 2; L3 = lapping pattern of guide bar 3): L1: 1-0/1-2//PA 6 22f1; L2: 2-3/1-0// PA 6 22f1; L3: 2-3/1-0// PA 6 22f1.

The textile weight of the inner lining layer 24 may be between 50 g/m$^2$ and 130 g/m$^2$. In some embodiments the textile weight of the inner lining layer is not more than 130 g/m$^2$.

The inner lining layer may be very thin, in particular if made from mechanically durable material and provided in a mechanically durable configuration like a suitable knit or woven made of tear resistant polymer. In some embodiments, Thickness of the inner lining layer 24 may be less than 1.5mm, or even less than 1 mm.Particularly, the inner lining layer may have a thickness in a range of 1 - 0.5 mm, particularly at around 0.8 mm. Using such lining layers 24, lightweight and thus highly vapour permeable, but yet durable footwear upper assemblies 12 can be provided. A footwear article 10 with such upper assembly 12 can be used in warm climate conditions, e.g. in deserts or tropical regions, despite the fact it is provided with a waterproof and water vapour permeable functional layer 22. In particular for use with such footwear article 10, the upper assembly 12 may be provided with a functional layer 22 of highly vapor permeable configuration.

A particular advantage of using an inner lining layer 24 as described above in a footwear article 10, is that such footwear article may have the capability of re-drying quickly after it has become wet on the inside. Neither the inner lining layer 24 nor the functional layer 22 attached to it do absorb significant amounts of water or other liquids. Thus, such water or other liquids may be desorbed relatively fast and efficiently by simply turning the footwear article 10 upside down, by shaking and air dry, and/or by possible heating up.

The layers of the upper laminate 16 may be joined together utilizing a variety of methods. One such method includes utilizing adhesives. The adhering to form the upper laminate 16 can be effected either with adhesive which has been applied in continuous form, i.e., over the whole area, or with adhesive which has been applied discontinuously, i.e. with gaps. Water-vapor-permeable adhesive is used in the case of a continuous adhesive layer being applied. For the use of a discontinuous adhesive layer, for example applied in powder, dot, net or matrix form, it is possible to use an adhesive which is not inherently water-vapor-permeable. Powdered adhesive may be desirable due to its low cost and the ease of adjusting adhesive laydowns. In this case, water vapor permeability is maintained by only a fraction of the surface of the layer being covered with adhesive.

The adhesive layer can be a layer of thermo-activatable adhesive. If this thermo-activatable adhesive is used for manufacturing a laminate 16 from which footwear is manufactured the activation of the laminating adhesive can be affected by a heating device either applied from the inside or from the outside of the shoe.

Alternatively, the individual layers of the upper laminate 16 may be laminated together utilizing ultrasonic bond, a seam seal, a heat bond, or the like. Similarly the upper laminate 16 and the outer shell 14 may be laminated together utilizing adhesive as described above, or alternatively using ultrasonic bond, a seam seal, a heat bond, or the like.

Example 1

An upper laminate 16 was made having a three layer configuration, as follows:

a) an outer textile layer 26 made of nonwoven polyester
b) a waterproof, vapor permeable microporous ePTFE functional layer 22; and
c) an inner lining layer 24 made of a polyamide (100 % PA 6) monofilaments in the configuration of a three bar warp knit fabric with a yarn of 100 % Mono dtex22/f1, a thickness of 0.29 mm, and weight of 57 g/m$^2$.
Such laminate was additionally provided with
d) a polyurethane adhesive layer formed by powder scattering on the outer textile layer, thus forming a discontinuous adhesive pattern on the outer textile layer.

The three layers a), b) and c) were laminated together using a discontinuous hot melt adhesive. In a separate step, the adhesive layer d) is formed on the outer textile layer.

The thickness of the upper laminate 16, including the adhesive layer d), was 0.49 mm. The weight of the upper laminate was 144 g/m$^2$.

According the Hohenstein skin model method described above, the upper laminate had an RET of about 4.5 m$^2$ Pa/W.

The upper laminate 16 was also tested for abrasion resistance utilizing the Abrasion Resistance Test described above. The laminate fulfilled the wet abrasion rate requirement of 300000 cycles Martindale (EN-ISO 20344:2004).

The upper laminate 16 was also tested for water absorption rate and re-dry time according to the methods described above. The results are listed in Table 1 below.

Table 1: Properties of upper laminate and article of footwear according to example 1, compared to reference examples 1 and 2:

| Properties | Example 1 | Reference 1 | Reference 2 |
|---|---|---|---|
| configuration of upper laminate (16) | three layer laminate with discontinuous adhesive layer | three layer laminate without adhesive layer | four layer laminate |
| configuration of outer textile layer | two bar knit of polyamide (PA) | two bar knit of polyamide (PA) | two bar knit of polyamide (PA) |
| configuration of functional layer (22) | ePTFE | ePTFE | ePTFE/PU |
| configuration of inner lining layer (24) | three bar warp knit of monofilament | three bar warp knit of multifilament | two layer-thermo-bonded non-woven |
| material of inner lining layer (24) | 100% PA6 | 70% PA6 + 30% PES (polyester) | 100% PA / 100% PES |
| thickness of inner lining layer (24) [mm] | 0.29 mm | 0.5 | 1.94 |
| thickness of upper laminate (16) [mm] | 0.49 | 0.72 | 2.2 |
| RET of upper laminate (16) [m$^2$Pa/W] | 4.5 | 6 | 15 |
| textile weight of inner lining layer (24) [g/m$^2$] | 57 | 140 | 275 |
| textile weight of upper laminate (16) [g/m$^2$] | 144 | 240 | 344 |

(continued)

| Properties | Example 1 | Reference 1 | Reference 2 |
|---|---|---|---|
| wet abrasion of upper laminate (16) [min. cycles Martindale EN-ISO 20344:2004] | 300000 | 51200 | 50000 |
| water absorption rate of inner lining layer (26) when included in upper laminate (16) [%] | 28 | 42 | 87 |
| re-dry time of upper laminate (16) [min] | 30 | 60 | 180 |
| whole boot moisture permeation rate [g/h] | >8.5 g/h | 5.6 g/h | 4.8 g/h |

For preparing an upper assembly 12, the upper laminate 16 was bonded to an outer shell 14 made of leather/textile combination. Adhesion was obtained by fitting the upper laminate 16 and the outer shell 14 onto a hot aluminium last and pressing the stack of layers together using a silicon rubber shape or a 360° membrane press. The arrangement of outer shell 14 and upper laminate 16 was such that the adhesive layer of the upper laminate 16 was in direct contact with the inside of the outer shell 14. Temperature of the last was set so as to activate the adhesive layer during the pressing process.

When assembled on the last, the lower edge of the upper laminate 16 exceeded beyond the lower edge of the outer shell 14 by 3 to 6 mm.

To prepare the upper assembly 12 of the footwear article 10, the laminate obtained in the procedure described above, i.e. including the outer shell 14 and the upper laminate 16, was fitted onto a last. In the example, the last had the form of a boot. An insole board 28 was attached to the underside of the last by staples, tape or adhesive dots. The stack formed by outer shell 14 and upper laminate 16 bonded together was wrapped around the last, and the outer shell/upper laminate stack was pulled over the toe region of the last. Using a lasting machine, the toe region of the outer shell/upper laminate stack was then attached to the insole board 28 using a hot melt adhesive that was applied automatically by the lasting machine. A second lasting machine was then used to complete the lasting of the side and heel areas of the upper assembly 12.

After the lasting operations were finished, the lower edge of the upper laminate 16 exceeding from the lower edge of the outer shell 14 was visible on the bottom side of the upper assembly 12.

In order to complete manufacturing of the footwear article 10, a sole unit 18 was applied according to any of the following constructions: (i) Cemented sole, by cementing a prefabricated outsole to the bottom of the upper assembly 12, or (ii) Injected sole, by direct injection of sole material to the bottom of the upper assembly 12.

(i) Cemented construction:

The bottom of the upper assembly 12 was sealed using a Hot Melt PU adhesive applied in the total surface of the bottom of the upper assembly 12, and then pressed with a hydraulic system press to guarantee perfect adhesion of the hot melt. The exceeded lining was completely sealed creating the waterproofness of the footwear bottom.

A prefabricricated outsole and the bottom of the upper assembly 12 with the adhesive applied thereto where then heated in a flash activator, as is standard in the art. The prefabricated outsole was then attached to the bottom of the upper assembly 12 and pressed onto the bottom of the upper assembly 12 in the sole press. The sole press was configured in a standard setup used for sole attachment. The finished article of footwear 10 was allowed to cool and the last was removed from the article of footwear 10, as described in WO 00/44252.

(ii) Injected construction:

The upper assembly 12 was fitted onto a last and closed in the bottom by an insole 28, as described above. The lasted upper assembly 12 was placed in a mold of a direct injection machine. The mold was closed around the upper assembly 12 such that the bottom of the upper assembly formed the top side of the mold. Hot liquid PU material was injected into the mold such as to fill the mold and seal the bottom side of the upper assembly 12, thereby forming a seal with the the exceeded part of the upper laminate 16 and creating the outsole 18. The penetration of the polyurethane into the structure of the exceeding upper laminate 16 was creating the complete waterproofness of the footwear bottom.

The footwear article obtained by the cemented construction described above as well as obtained by the injected construction above was then tested for waterproofness according to the test for whole boot waterproofness described above ("Dynamic Footwear Water Penetration Test"). The article of footwear passed the test.

Whole boot moisture vapor transmission rate was tested according to a test method as described above. As a result, the footwear article 10 having a cemented sole construction as well as the footwear article 10 having an injected sole construction showed a whole boot moisture vapor transmission rate of greater 8.5 g/h

**Comparative Example 1**

An upper laminate 16 was made having a three layer configuration, as follows:

a) an outer textile layer 26 made of a two bar knit of polyamide;
b) a waterproof, vapor permeable microporous ePTFE functional layer 22; and
c) an inner lining layer 24 made of a three bar knit of 70% polyamide 6 and 30% polyester multifilaments with a thickness of 0.5 mm, and a weight of 140 g/m$^2$.

The three layers were laminated together using a discontinuous adhesive pattern. The thickness of the laminate 16 was 0.72 mm. The weight of the laminate was 240 g/m$^2$.
The RET of the laminate was about 6 m$^2$Pa/W according to the Hohenstein skin model method described above.
The laminate was also tested for abrasion resistance utilizing the Abrasion Resistance Test described above. The laminate was measured to fulfil the wet abrasion rate requirement of 51000 cycles Martindale (EN-ISO 20344:2004).
The laminate was also tested for water absorption rate and re-dry time time according to the methods described above. The results are listed in Table 1.

**Comparative Example 2**

An upper laminate 16 was made having a four layer configuration, as follows:

a) an outer textile layer 26 made of a two bar knit of polyamide;
b) a waterproof, vapor permeable microporous ePTFE/hydrophilic PU functional layer 22 as described in US 4 194 041; comprising, and
c) an inner lining layer 24 comprising a first layer made of multifilaments in the configuration of a 72% polyamide (PA), 28% polyester (PES) warp knit. The inner lining layer 24 comprises also a second nonwoven insulation layer made of 100% polyester (PES) attached to the outer side of the first layer using a powder adhesive.

The three layers were laminated together using a discontinuous adhesive pattern The thickness of the laminate 16 was 2.2 mm. The weight of the laminate was 344 g/m$^2$.
The RET of the laminate was about 15 m$^2$Pa/W according to the Hohenstein skin model method described above.
The laminate was also tested for abrasion resistance utilizing the Abrasion Resistance Test described above. The laminate fulfilled a wet abrasion rate of 50000 cycles Martindale (EN-ISO 20344:2004).
The laminate was also tested for water absorption rate and re-dry time according to the tests described above. The results are listed in Table 1.

**Claims**

1. An upper assembly (12) for a waterproof, water vapor permeable footwear article (10), the upper assembly comprising a laminate (16) including a waterproof water vapor permeable functional layer (22) and an inner lining layer (24) directly attached to the functional layer (22) on an inner side of functional layer (22);
   **characterized in that** the inner lining layer (24) is a knitted or woven fabric made with monofilaments.

2. The upper assembly (12) of claim 1, wherein the inner lining layer (24) is made up with monofilaments having a water absorption rate of less than 40% according to DIN EN 29865 (1991), particularly of less than 30 % according to DIN EN 29685 (1991), particularly of less than 25% according to DIN EN 29865 (1991), particularly of 20% to 35% according to DIN EN 29685.

3. The upper assembly (12) of claim 1 or 2, wherein the inner lining layer (24) has a textile weight of not more than 130 g/m$^2$, particularly not more than 100 g/m$^2$, particularly of not more than 90 g/m$^2$, particularly of 50 g/m$^2$ to 130 g/m$^2$.

4. The upper assembly (12) of any of the previous claims, wherein the laminate (16) has a weight of less than 200g/m$^2$, particularly less than 170 g/m$^2$, particularly of less than 150 g/m$^2$, particularly of 30 g/m$^2$ to 170 g/m$^2$.

**5.** The upper assembly (12) of any of the previous claims, further comprising an outer shell (14), the laminate (16) being attached to an inner side of the outer shell (14).

**6.** The upper assembly (12) of claim 5, wherein the laminate (16) is directly attached to the outer shell (14) using a discontinuous adhesive.

**7.** The upper assembly (12) of any of the previous claims, wherein the laminate (16) has a dry-out time of less than one hour, particularly of less than 30 minutes, particularly of less than 20 minutes, particularly of 15 minutes to 45 minutes.

**8.** The upper assembly (12) of any of the previous claims, wherein the inner lining layer (24) has a wet abrasion resistance of more than 100000 cycles Martindale (EN-ISO 20344:2004), particularly has a wet abrasion resistance of more than 300000 cycles Martindale (EN-ISO 20344:2004), particularly has a wet abrasion resistance of more than 400000 cycles Martindale (EN-ISO 20344:2004), particularly has a wet abrasion resistance of 300000 to 450000 cycles Martindale (EN-ISO 20344:2004).

**9.** The upper assembly (12) of any of the previous claims, wherein the inner lining layer (24) is a warp knit, particularly a three bar warp knit.

**10.** The upper assembly (12) of any of the previous claims, wherein the inner lining layer (24) is a singular knitted fabric.

**11.** The upper assembly (12) of any of the previous claims, wherein the inner lining layer (24) is made of any of the group consisting of polyamide, e.g. polyamide 6 and/or polyamide 6.6, polyester, and combinations thereof.

**12.** The upper assembly (12) of any of the previous claims, wherein the functional layer (22) comprises a porous membrane made of expanded polytetrafluoroethylene (ePTFE).

**13.** The upper assembly (12) of any of the previous claims, wherein the laminate (16) further comprises an outer textile layer (26) attached to an outer side of the functional layer (22).

**14.** The upper assembly (12) of any of the previous claims, wherein the laminate (16) extends around the upper side of the foot.

**15.** The upper assembly (12) of any of the previous claims, wherein the laminate (16), at least on the side of the inner lining layer (24), is seam sealable without the use of a primer.

**16.** The upper assembly (12) of any of the previous claims, wherein the inner layer (24) of the laminate (16) is the innermost layer of the upper assembly (12).

**17.** A waterproof, water vapor permeable footwear article (10) comprising an upper assembly according to any of the previous claims, and a sole (18) in communication with the upper assembly (12).

**18.** The article (10) of claim 17, wherein the article has a whole boot moisture vapor transmission rate of 7 g/hr or greater, particularly of 8.75 g/hr or greater, particularly of 8 to 9.5 g/hr.

**19.** The article of claim 18, being configured such as to do not show any water penetration when being subject to 100000 flexes in a test as described in IS0 20344:2011 5.15.2 "Dynamic footwear water penetration test (Flex Test)"; particularly configured such as to do not show any water penetration when being subject to 300000 flexes in a test as described in IS0 20344:2011 5.15.2 "Dynamic footwear water penetration test (Flex Test)", particularly configured such as to do not show any water penetration when being subject to 500000 flexes in a test as described in IS0 20344:2011 5.15.2 "Dynamic footwear water penetration test (Flex Test)".

**Patentansprüche**

**1.** Schaftanordnung (12) für wasserdichtes, wasserdampfdurchlässiges Schuhwerk (10), wobei die Schaftanordnung ein Laminat (16) aufweist, das eine wasserdichte wasserdampfdurchlässige Funktionsschicht (22) und eine innere Auskleidungsschicht (24) aufweist, die auf einer Innenseite der Funktionsschicht (22) direkt an der Funktionsschicht (22) angebracht ist; **dadurch gekennzeichnet, dass** die innere Auskleidungsschicht (24) ein Gewirk oder ein Gewebe mit Monofilamenten ist.

2. Schaftanordnung (12) nach Anspruch 1,
   wobei die innere Auskleidungsschicht (24) mit Monofilamenten gebildet ist, die eine Wasserabsorptionsrate von weniger als 40% nach DIN EN 29865 (1991), insbesondere von weniger als 30% gemäß DIN EN 29685 (1991), insbesondere von weniger als 25% nach DIN EN 29865 (1991), insbesondere von 20% bis 35% nach DIN EN 29685, aufweisen.

3. Schaftanordnung (12) nach Anspruch 1 oder 2,
   wobei die innere Auskleidungsschicht (24) ein Textilgewicht von nicht mehr als 130 g/m$^2$, insbesondere nicht mehr als 100 g/m$^2$, insbesondere nicht mehr als 90 g/m$^2$, insbesondere von 50 g/m$^2$ bis 130 g/m$^2$, aufweist.

4. Schaftanordnung (12) nach einem der vorhergehenden Ansprüche,
   wobei das Laminat (16) ein Gewicht von weniger als 200 g/m$^2$, insbesondere weniger als 170 g/m$^2$, insbesondere weniger als 150 g/m$^2$, insbesondere von 30 g/m$^2$ bis 170 g/m$^2$, aufweist.

5. Schaftanordnung (12) nach einem der vorhergehenden Ansprüche,
   weiterhin aufweisend eine äußere Hülle (14), wobei das Laminat (16) an einer Innenseite der äußeren Hülle (14) angebracht ist.

6. Schaftanordnung (12) nach Anspruch 5,
   wobei das Laminat (16) unter Verwendung eines diskontinuierlichen Klebstoffs direkt an der äußeren Hülle (14) angebracht ist.

7. Schaftanordnung (12) nach einem der vorhergehenden Ansprüche, wobei das Laminat (16) eine Austrocknungszeit von weniger als einer Stunde, insbesondere von weniger als 30 Minuten, insbesondere von weniger als 20 Minuten, insbesondere von 15 Minuten bis 45 Minuten, aufweist.

8. Schaftanordnung (12) nach einem der vorhergehenden Ansprüche, wobei die innere Auskleidungsschicht (24) eine Nassabriebfestigkeit von mehr als 100000 Zyklen Martindale (EN-ISO 20344:2004), insbesondere eine Nassabriebfestigkeit von mehr als 300000 Zyklen Martindale (EN-ISO 20344:2004), insbesondere eine Nassabriebfestigkeit von mehr als 400000 Zyklen Martindale (EN-ISO 20344:2004), insbesondere eine Nassabriebfestigkeit von 300000 bis 450000 Zyklen Martindale (EN-ISO 20344: 2004), aufweist.

9. Schaftanordnung (12) nach einem der vorhergehenden Ansprüche, wobei die innere Auskleidungsschicht (24) ein Kettengewirk, insbesondere ein dreibarriges Kettengewirk, ist.

10. Schaftanordnung (12) nach einem der vorhergehenden Ansprüche, wobei die innere Auskleidungsschicht (24) ein Einzelgewirk ist.

11. Schaftanordnung (12) nach einem der vorhergehenden Ansprüche, wobei die innere Auskleidungsschicht (24) aus einem Material der Gruppe bestehend aus Polyamid, z.B. Polyamid 6 und/oder Polyamid-6.6, Polyester und Kombinationen davon, gebildet ist.

12. Schaftanordnung (12) nach einem der vorhergehenden Ansprüche, wobei die Funktionsschicht (22) eine poröse Membran aus expandiertem Polytetrafluorethylen (ePTFE) aufweist.

13. Schaftanordnung (12) nach einem der vorhergehenden Ansprüche, wobei das Laminat (16) ferner eine äußere textile Schicht (26) aufweist, die an einer Außenseite der Funktionsschicht (22) angebracht ist.

14. Schaftanordnung (12) nach einem der vorhergehenden Ansprüche, wobei sich das Laminat (16) um die Oberseite des Fußes herum erstreckt.

15. Schaftanordnung (12) nach einem der vorhergehenden Ansprüche, wobei das Laminat (16) zumindest auf der Seite der inneren Auskleidungsschicht (24) ohne die Verwendung eines Haftvermittlers Naht-abdichtbar ist.

16. Schaftanordnung (12) nach einem der vorhergehenden Ansprüche,

wobei die innere Schicht (24) des Laminats (16) die innerste Schicht der Schaftanordnung (12) ist.

17. Wasserdichtes, wasserdampfdurchlässiges Schuhwerk (10) mit einer Schaftanordung nach einem der vorhergehenden Ansprüche und mit einer Sohle (18) in Verbindung der Schaftanordnung (12).

18. Schuhwerk (10) nach Anspruch 17,
wobei das Schuhwerk eine Gesamtschuh-Feuchtigkeitsdampfübertragungsrate von 7 g/h oder mehr, insbesondere von 8,75 g/h oder mehr, insbesondere von 8 bis 9,5 g/h, aufweist.

19. Schuhwerk nach Anspruch 18,
das derart konfiguriert ist, dass es keinerlei Wasserpenetration zeigt, wenn es 100000 Biegungen in einem Test gemäß Beschreibung in ISO 20344:2011 5.15.2 "Dynamic Footwear Water Penetration Test (Flex-Test)" unterzogen wird, insbesondere derart konfiguriert ist, dass es keinerlei Wasserpenetration zeigt, wenn es 300000 Biegungen in einem Test gemäß Beschreibung in ISO 20344:2011 5.15.2 "Dynamic Footwear Water Penetration Test (Flex-Test)" unterzogen wird, insbesondere derart konfiguriert ist, dass es keinerlei Wasserpenetration zeigt, wenn es 500000 Biegungen in einem Test gemäß Beschreibung in ISO 20344:2011 5.15.2 "Dynamic Footwear Water Penetration Test (Flex-Test)" unterzogen wird.

**Revendications**

1. Ensemble tige (12) pour un article chaussant étanche à l'eau et perméable à la vapeur d'eau (10), l'ensemble tige comprenant un stratifié (16) comprenant une couche fonctionnelle étanche à l'eau et perméable à la vapeur d'eau (22) et une couche de revêtement intérieur (24) directement fixée à la couche fonctionnelle (22) sur un côté intérieur de la couche fonctionnelle (22) ;
**caractérisé en ce que** la couche de revêtement intérieur (24) est un tissu tricoté ou tissé fait avec des monofilaments.

2. Ensemble tige (12) selon la revendication 1, dans lequel la couche de revêtement intérieur (24) est composée avec des monofilaments possédant un taux d'absorption d'eau inférieur à 40 % selon DIN EN 29865 (1991), particulièrement inférieur à 30 % selon DIN EN 29685 (1991), particulièrement inférieur à 25 % selon DIN EN 29865 (1991), particulièrement de 20 % à 35 % selon DIN EN 29685.

3. Ensemble tige (12) selon la revendication 1 ou 2, dans lequel la couche de revêtement intérieur (24) possède un poids textile non supérieur à 130 g/m$^2$, particulièrement non supérieur à 100 g/m$^2$, particulièrement non supérieur à 90 g/m$^2$, particulièrement de 50 g/m$^2$ à 130 g/m$^2$.

4. Ensemble tige (12) selon une quelconque des revendications précédentes, dans lequel le stratifié (16) possède un poids inférieur à 200 g/m$^2$, particulièrement inférieur à 170 g/m$^2$, particulièrement inférieur à 150 g/m$^2$, particulièrement de 30 g/m$^2$ à 170 g/m$^2$.

5. Ensemble tige (12) selon une quelconque des revendications précédentes, comprenant en outre une enveloppe extérieure (14), le stratifié (16) étant fixé à un côté intérieur de l'enveloppe extérieure (14).

6. Ensemble tige (12) selon la revendication 5, dans lequel le stratifié (16) est directement fixé à l'enveloppe extérieure (14) en utilisant un adhésif discontinu.

7. Ensemble tige (12) selon une quelconque des revendications précédentes, dans lequel le stratifié (16) possède un temps de séchage inférieur à une heure, particulièrement inférieur à 30 minutes, particulièrement inférieur à 20 minutes, particulièrement de 15 minutes à 45 minutes.

8. Ensemble tige (12) selon une quelconque des revendications précédentes, dans lequel la couche de revêtement intérieur (24) possède une résistance à l'abrasion sous eau supérieure à 100000 cycles Martindale (EN-ISO 20344:2004), particulièrement possède une résistance à l'abrasion sous eau supérieure à 300000 cycles Martindale (EN-ISO 20344:2004), particulièrement possède une résistance à l'abrasion sous eau supérieure à 400000 cycles Martindale (EN-ISO 20344:2004), particulièrement possède une résistance à l'abrasion sous eau de 300000 à 450000 cycles Martindale (EN-ISO 20344:2004).

9. Ensemble tige (12) selon une quelconque des revendications précédentes, dans lequel la couche de revêtement intérieur (24) est un tricot chaîne, particulièrement un tricot chaîne à trois barres.

10. Ensemble tige (12) selon une quelconque des revendications précédentes, dans lequel la couche de revêtement intérieur (24) est un tissu tricoté singulier.

11. Ensemble tige (12) selon une quelconque des revendications précédentes, dans lequel la couche de revêtement intérieur (24) est composée d'un quelconque du groupe constitué de polyamide, par exemple polyamide 6 et/ou polyamide 6.6, polyester, et des associations de ceux-ci.

12. Ensemble tige (12) selon une quelconque des revendications précédentes, dans lequel la couche fonctionnelle (22) comprend une membrane poreuse faite de polytétrafluoroéthylène spongieux (ePTFE).

13. Ensemble tige (12) selon une quelconque des revendications précédentes, dans lequel le stratifié (16) comprend en outre une couche textile extérieure (26) fixée à un côté extérieur de la couche fonctionnelle (22).

14. Ensemble tige (12) selon une quelconque des revendications précédentes, dans lequel le stratifié (16) s'étend autour du côté supérieur du pied.

15. Ensemble tige (12) selon une quelconque des revendications précédentes, dans lequel le stratifié (16), au moins sur le côté de la couche de revêtement intérieur (24), est scellable en couture sans l'utilisation d'apprêt.

16. Ensemble tige (12) selon une quelconque des revendications précédentes, dans lequel la couche intérieure (24) du stratifié (16) est la couche la plus intérieure de l'ensemble tige (12).

17. Article chaussant étanche à l'eau et perméable à la vapeur d'eau (10) comprenant un ensemble tige selon une quelconque des revendications précédentes, et une semelle (18) en communication avec l'ensemble tige (12).

18. Article (10) selon la revendication 17, dans lequel l'article possède une étanchéité à la vapeur d'eau totale de 7 g/hr ou plus, particulièrement de 8,75 g/hr ou plus, particulièrement de 8 à 9,5 g/hr.

19. Article selon la revendication 18, configuré afin de ne présenter aucune pénétration d'eau lorsqu'il est soumis à 100000 flexions dans un essai tel qu'il est décrit dans ISO 20344:2011 5.15.2 « Dynamic footwear water penetration test (Flex Test) » ; particulièrement configuré afin de ne présenter aucune pénétration d'eau lorsqu'il est soumis à 300000 flexions dans un essai tel qu'il est décrit dans ISO 20344:2011 5.15.2 « Dynamic footwear water pénétration test (Flex Test) », particulièrement configuré afin de ne présenter aucune pénétration d'eau lorsqu'il est soumis à 500000 flexions dans un essai tel qu'il est décrit dans ISO 20344:2011 5.15.2 « Dynamic footwear water penetration test (Flex Test) ».

Fig. 2

Fig. 1

Fig. 3a

32a    24    32b    32c    32

Fig. 3b:

32a    32b    32c    24    32d

32

Fig. 4

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110179677 A1
- US 20040216332 A1
- EP 0298360 A2
- US 3953566 A
- US 5814405 A
- US 7306729 B
- US 6541589 B
- US 7406729 B
- US 4194041 A
- WO 0044252 A